Europäisches Patentamt

European Patent Office

Office européen des brevets

(11) Numéro de publication: **0 079 523**
**A1**

## (12) DEMANDE DE BREVET EUROPEEN

(21) Numéro de dépôt: **82110120.1**

(22) Date de dépôt: **03.11.82**

(51) Int. Cl.³: **F 26 B 23/00**
**F 26 B 21/04, F 26 B 25/00**
**F 26 B 13/10**

(30) Priorité: **06.11.81 FR 8120887**
**05.03.82 FR 8203785**

(43) Date de publication de la demande:
**25.05.83 Bulletin 83/21**

(84) Etats contractants désignés:
**AT BE CH DE GB IT LI NL SE**

(71) Demandeur: **Etablissements NEU Société Anonyme dite:**
**47, rue Fourrier**
**F-59000 Lille(FR)**

(72) Inventeur: **Brouard, Dominique Marc**
**27 avenue du Canon d'Or**
**F-59130 Lambersart(FR)**

(74) Mandataire: **Casalonga, Axel et al,**
**BUREAU D.A. CASALONGA OFFICE JOSSE & PETIT**
**Baaderstrasse 12-14**
**D-8000 München 5(DE)**

(54) **Installation de séchage à plusieurs sources d'énergie.**

(57) Installaton de séchage par gaz chauds et secs comprenant au moins deux zones traversées successivement par la matière à sécher.

L'installation comprend : une pompe à chaleur dont le condenseur (12b) est disposé dans la deuxième zone (2) de façon à chauffer par contact les gaz circulant dans cette zone et dont l'évaporateur (8b) est placé dans un dispositif extérieur de déshydratation et de réchauffage; une source d'énergie calorifique (11b) disposée dans la première zone (1) de façon à chauffer par contact les gaz circulant dans cette zone; des moyens d'extraction (6) pour prélever la totalité des gaz circulant dans la première zone et les introduire dans le dispositif extérieur de déshydration et de réchauffage précité afin qu'ils entrent en contact avec l'évaporateur de la pompe à chaleur pour être déshydratés, des moyens (10) dans le dispositif extérieur de déshydratation et de réchauffage pour réchauffer et réintroduire dans la première zone au moins une partie de ces gaz, au voisinage de la jonction (4) entre la première et la deuxième zone, lesdits gaz se mélangeant alors avec les gaz provenant de la deuxième zone et alimentant la première zone.

FIG.1

EP 0 079 523 A1

Installation de séchage à plusieurs sources d'énergie.

L'invention est relative à une installation de séchage utilisant au moins deux sources d'énergie pour le chauffage des séchoirs dans lesquels le fluide caloporteur venant en contact avec la matière à sécher pour en extraire l'eau qu'elle contient est de l'air chaud, ou plus généralement un mélange de gaz chauds.

Bien entendu, l'eau n'est prise ici qu'à titre d'exemple des liquides à extraire, la matière traitée dans l'installation conforme à l'invention pouvant être un liquide volatil quelconque, imbibant la matière à un stade quelconque de son élaboration ou de sa transformation.

On connaît déjà des installations de séchage utilisant des échangeurs recevant par exemple de la vapeur d'eau surchauffée, ces échangeurs étant disposés dans les diverses zones des séchoirs de l'installation. Ces installations présentent cependant l'inconvénient de consommer des quantités importantes d'énergie.

On connaît également des installations de chauffage utilisant des pompes à chaleur et travaillant de ce fait à des températures plus basses que les installations précitées. Compte tenu de ces températures basses (au maximum environ 100°C) il est nécessaire d'augmenter les dimensions de l'installation.

La présente invention a pour objet une installation de séchage qui combine les avantages des échangeurs classiques et des pompes à chaleur et permet d'obtenir un excellent rendement spécifique dans une zone d'entrée à haute température tout en récupérant une part notable de l'énergie des gaz de séchage au moyen d'une pompe à chaleur.

L'installation de séchage par gaz chauds et secs selon l'invention comprend au moins deux zones traversées successivement par la matière à sécher. Elle comprend en outre : une pompe à chaleur dont le condenseur est disposé dans la deuxième zone de façon à chauffer par contact les gaz circulant dans cette zone et dont l'évaporateur est placé dans un dispositif extérieur de déshydratation et de réchauffage; une source d'énergie calorifique disposée dans la première zone de façon à chauffer par contact les gaz circulant dans cette zone; des moyens d'extraction pour prélever la totalité des gaz circulant dans la première zone et les introduire dans le dispositif extérieur de déshydratation et de réchauffage précité afin qu'ils entrent en contact avec l'évaporateur de la pompe à chaleur pour être déshydratés; et des moyens dans le dispositif extérieur de déshydratation et de réchauffage pour réchauffer et réintroduire dans la première zone au moins une partie de ces gaz, au voisinage de la jonction entre la première et la deuxième zone, lesdits gaz se mélangeant alors avec les gaz provenant de la deuxième zone et alimentant la première zone.

Grâce à l'invention il est donc possible de chauffer les gaz ou l'air circulant dans une partie de séchoir par une source d'énergie traditionnelle (telle que combustion directe d'un combustible solide, liquide ou gazeux, ou chauffage indirect à l'aide d'échangeurs eux-mêmes traversés par un fluide caloporteur), l'ensemble des gaz ou de l'air ainsi chauffé étant déshydraté par contact avec les évaporateurs de pompes à chaleur avant d'être rechauffé et réintroduit au moins pour partie dans le séchoir, et l'énergie recueillie sur les évaporateurs des pompes à chaleur étant dissipée, de préférence intégralement, dans les condenseurs desdites pompes à chaleur pour réchauffer les gaz ou l'air circulant dans les autres parties du séchoir. Ces mêmes autres parties constituant la deuxième zone précitée peuvent également être chauffées par les échangeurs de sous-refroidissement du fluide frigorigène des pompes à chaleur.

Avantageusement, le fonctionnement des séchoirs des installations de la présente invention peut être prévu pour que la totalité de l'énergie récupérée à partir des gaz extraits de la zone chauffée par la source traditionnelle d'énergie soit dissipée sur les gaz circulant dans la zone chauffée par les condenseurs des pompes à chaleur.

Avantageusesement aussi, le séchoir ainsi constitué est muni d'une seule extraction de gaz ou d'air chargé d'humidité, laquelle est de préférence située en tête de la première zone pour permettre une circulation à contre courant du gaz extrait sur toute la longueur du séchoir, la réinjection dans celui-ci d'une partie au moins des gaz extraits après déshydration et réchauffage étant faite à l'interface entre la première et la seconde zone. La réintroduction de ces gaz peut également être faite à certains endroits déterminés de la deuxième zone.

Avantageusement encore, les deux zones présentent des longueurs telles que les quantités d'eau respectivement évacuées avec le gaz transféré de la deuxième zone à la première d'une part, et de la première zone au dispositif de déshydration d'autre part soient intégralement récupérées sur ce dernier pour permettre d'utiliser en plusieurs circuits fermés imbriqués ou parallèles la totalité du gaz circulant dans l'ensemble de la machine, en vue notamment d'assurer dans la deuxième zone un équilibre hygrométrique susceptible d'interdire le surséchage de la matière en fin de traitement. Cela est spécialement intéressant quant on doit sécher des matières sensibles à la chaleur, comme notamment les fibres animales.

Avantageusement encore, la totalité du gaz extrait de la partie de l'installation qui est chauffée par une source d'énergie traditionnelle, c'est-à-dire la première zone, passe par un échangeur complémentaire monté en amont de l'évaporateur dans le dispositif de déshydratation. Cet échangeur complémentaire peut récupérer une partie de la chaleur du gaz en vue par exemple de préchauffer le gaz neuf introduit dans le séchoir, avant d'abandonner le reste de son énergie récupérable sur l'évaporateur de la pompe à chaleur servant à chauffer le gaz circulant dans l'autre partie du séchoir ainsi constitué ou deuxième zone. Dans une variante, cet échangeur complémentaire sert à réchauffer en partie les gaz recyclés en utilisant à cette fin une seconde pompe à chaleur ou une partie des circuits d'une pompe à chaleur classique.

Avantageusement enfin, le débit de gaz humide extrait du séchoir pour être au moins en partie recyclé en un endroit choisi de celui-ci, peut être amené à varier, en vue par exemple d'adapter les quantités d'énergie prélevées des diverses sources de chaleur alimentant le séchoir aux conditions économiques optimales d'exploitation de ce dernier.

Dans ce but, on peut prévoit un moyen de contrôle automatique et continu asservissant le débit des gaz recyclés à la quantité d'eau introduite dans l'installation avec la matière à sécher. Un microprocesseur peut avantageusement être utilisé pour optimiser en continu les paramètres du fonctionnement de l'installation.

Ainsi définie, l'invention peut s'appliquer à de multiples types de séchoirs parmi lesquels on citera à titre d'exemple : les séchoirs pneumatiques constitués par une ou plusieurs colonnes verticales ou segments de colonnes verticales, ou plusieurs séchoirs fluidiseurs placés en cascade les uns par rapport aux autres, les séchoirs tunnels constitués de chambres de séchage successivement accoléess les unes aux autres dans le sens de défilement de la matière, les séchoirs à tambours dont les viroles sont pleines ou perforées. Le fluide utilisé pour le séchage peut être de l'air ou de manière particulièrement avantageuse une vapeur surchauffée d'un fluide quelconque.

L'invention peut également être appliquée à un séchoir comportant plus de deux zones, en constituant sous la forme d'un motif de configuration récurrente, l'ensemble constitué par l'évaporateur de la pompe à chaleur faisant partie du dispositif extérieur de déshydratation et de réchauffage associé à l'une des zones, la pompe à chaleur elle-même avec son compresseur ainsi que le condenseur servant au chauffage de la zone suivante dans le sens du déplacement de la matière à sécher.

L'installation de séchage par gaz chauds et secs du type mentionné précédemment comprenant au moins deux zones traversées successivement par la matière à sécher comprend donc, selon une variante de la présente invention, en plus du dispositif extérieur de déshydratation et de réchauffage recevant la totalité des gaz circulant dans la première zone et associé à ladite première zone, pour la deuxième zone et pour chacune des zones suivantes, un dispositif extérieur de déshydratation et de réchauffage coopérant avec un circuit de pompe à chaleur dont l'ensemble évaporateur fait partie du dispositif de déshydratation et de réchauffage et dont l'ensemble condenseur sert au chauffage de la zone immédiatement suivante. Une partie des gaz issus de l'ensemble évaporateur sont réintroduits dans la zone associée, l'autre partie des gaz étant amenée à l'ensemble évaporateur du dispositif de déshydratation et de réchauffage de la zone immédiatement suivante.

Si dans le cas d'un séchoir constitué de n zones numérotées de 1 à n entre l'entrée et la sortie de la matière à traiter, on désigne par l'indice i une zone courante quelconque du séchoir comprise entre la première et la n ième zone, le motif récurrent ainsi défini associe donc dans le même circuit de pompe à chaleur le ou les condenseurs servant à réchauffer la zone de rang i avec le ou les évaporateurs faisant partie du dispositif extérieur de déshydratation et de réchauffage associé à la zone de rang (i - 1).

La première zone ou zone d'entrée de la matière à traiter est chauffée par une source d'énergie indépendante, par exemple au moyen d'une batterie de chauffage constituée d'échangeurs de chaleur de type classique. La dernière zone c'est-à-dire la zone de sortie de la matière à traiter est chauffée quant à elle par l'ensemble condenseur faisant partie du circuit de pompe à chaleur qui inclut également l'ensemble évaporateur du dispositif extérieur de déshydratation et de réchauffage associé à l'avant dernière zone.

Les ensembles condenseurs servant au chauffage des zones de rang supérieur à 1 peuvent être placés directement à l'intérieur de chacune des zones considérées. En variante et selon les applications, on peut également placer ces condenseurs dans le conduit d'admission des gaz chauds et déshydratés qui sont réinjectés dans lesdites zones.

Aussi bien dans l'application à un séchoir à deux zones selon que dans l'extension à un séchoir comportant plus de deux zones il peut être spécialement avantageux de prévoir que les condenseurs des pompes à chaleur servant à restituer à un niveau plus élevé dans une zone de rang i l'énergie recouvrée dans le dispositif externe de déshydratation et de réchauffage associé à la zone précédente, c'est-à-dire celle de l'étage (i - 1), soient placés de telle manière que l'énergie qu'ils dissipent parvienne à l'intérieur du séchoir de manière indirecte au moyen d'une boucle intermédiaire fonctionnant avec un fluide caloporteurs distinct de celui qui circule dans le circuit de la pompe à chaleur elle-même.

Dans un tel mode de réalisation, au moins certains des ensembles condenseurs sont chacun constitués par le premier circuit d'un échangeur de chaleur entre deux fluides, l'autre circuit dudit échangeur se trouvant dans une boucle intermédiaire véhiculant un fluide secondaire qui traverse également un ensemble de batteries de chauffage disposées directement à l'intérieur de la zone correspondant à l'ensemble condenseur considéré.

Une telle variante est particulièrement utile lorsque les besoins en énergie à communiquer aux gaz de séchage sont tels que les condenseurs qui doivent être utilisés sont trop encombrants pour être logés aisément à l'intérieur des zones considérées. Il en est ainsi en particulier lorsque la matière à sécher est constituée d'un produit très polluant qui doit donc être véhiculé à l'intérieur de séchoirs chauffés par des échangeurs à tubes lisses.

Dans un tel mode de réalisation les différentes boucles intermédiaires peuvent avantageusement comprendre des vannes de distribution pouvant être régulées et autorisant le passage du fluide secondaire en partie dans les batteries de chauffage des zones de rang supérieur à 1 et en partie vers les batteries de chauffage placées directement dans la première zone. Une telle configuration de circuit de chauffage qui n'est possible que si le fluide utilisé pour chauffer la première zone est le même que celui qui circule dans les différentes boucles intermédiaires permet, par une régulation convenable des différentes vannes de distribution, d'agir en permanence sur les consommations prélevées respectivement sur la source d'énergie indépendante chauffant la première zone et sur les autres sources d'énergie constituées par les différents circuits de pompe à chaleur. Il devient ainsi possible d'adapter à tout moment, éventuellement automatiquement, les conditions de fonctionnement de l'installation de séchage en fonction du coût respectif de ces différentes sources d'énergie.

L'invention peut être appliquée comme il a été dit à divers types de séchoirs parmi lesquels les séchoirs pneumatiques sous forme de colonnes verticales. Une application particulièrement intéressante est celle qui met en oeuvre un séchoir pneumatique comprenant une enceinte verticale munie de moyens d'alimentation en fluide susceptibles de provoquer la mise en suspension et en circulation de particules solides à sécher sous forme de mélanges fluidisés. Un tel séchoir est décrit en détail dans la demande de brevet français n° 81 22685 du 3 décembre 1981 au nom de la demanderesse, demande qui est incorporée à titre de référence au présent texte. Dans un tel séchoir, l'enceinte verticale est constituée par l'assemblage d'une pluralité de cellules comportant un conduit de reprise du fluide et un conduit d'introduction de fluide supplémentaire en partie recyclé après traitement. Le fluide supplémentaire ainsi recyclé est traité selon la présente invention par le dispositif extérieur de déshydratation et de réchauffage associé à la cellule considérée qui constitue l'une des zones précitées.

Chacune des cellules comprend des moyens de recirculation interne diminuant la section de passage pour le mélange fluidisé au droit de ces moyens de recirculation. Dans ces conditions, le mélange fluidisé subit dans chaque cellule ou zone de l'enceinte un mouvement tourbillonnaire effectuant une recirculation partielle du mélange fluidisé de nature à augmenter son temps de séjour dans l'enceinte de traitement. L'introduction du débit de fluide supplémentaire dans les cellules apporte une quantité de mouvement créant au augmentant le mouvement tourbillonnaire du mélange dans la cellule considérée.

Dans un mode de réalisation préféré, le fluide repris à partir de la première cellule est réintroduit après traitement à la fois dans la première cellule et dans les cellules suivantes.

L'invention sera mieux comprise à l'étude de quelques modes de réalisation particuliers décrits à titre nullement limitatif et illustrés par les dessins annexés, sur lesquel :

la fig. 1 est un schéma de fonctionnement simplifié d'une installation de séchage selon l'invention comprenant un séchoir-tunnel alimenté en air chaud;

la fig. 2 est un schéma de fonctionnement simplifié d'une installation de séchage de matière textile en nappe continue selon l'invention, comprenant un séchoir-tunnel alimenté en vapeur surchauffée;

la fig. 3 représente schématiquement les éléments essentiels d'une installation de séchage selon l'invention comportant quatre zones;

la fig. 4 est une vue schématique des deux premières zones d'une installation selon l'invention illustrant la disposition d'une boucle intermédiaire;

la fig. 5 illustre une variante du mode de réalisation de la fig. 4 comportant des vannes de distribution régulées; et

la fig. 6 illustre l'application de l'invention à un séchoir pneumatique comportant une colonne verticale constituée par l'assemblage de plusieurs cellules modulaires.

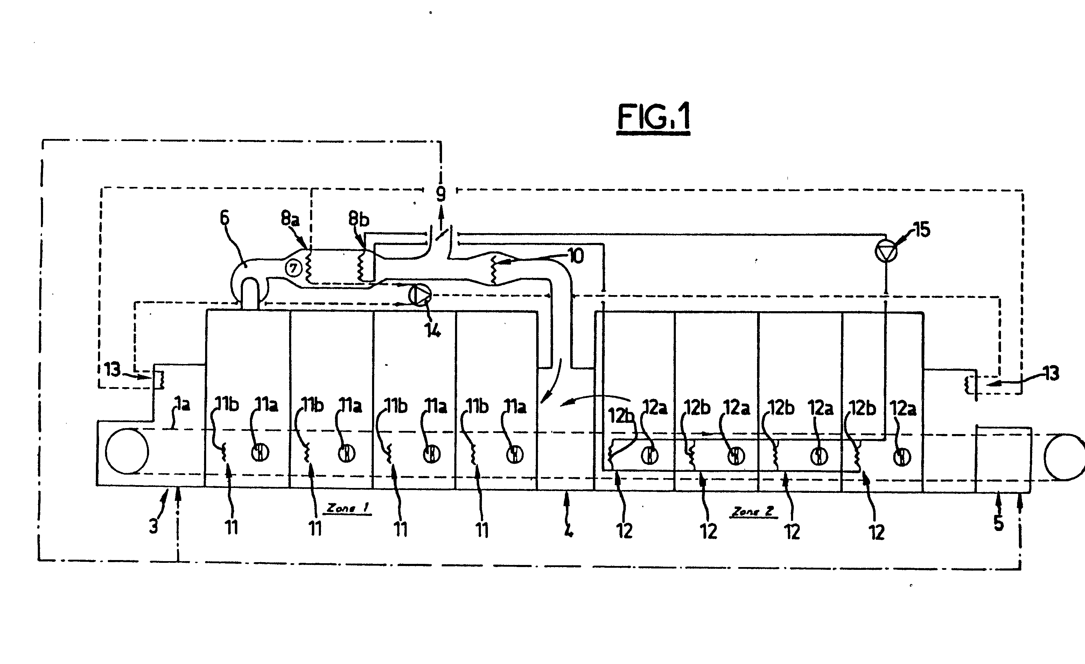

Tel qu'elle est représentée sur la fig. 1, l'installation de séchage selon l'invention comprend un séchoir continu à tablier pneumatique transporteur 1a divisé en deux zones respectivement dénommées zone 1 et zone 2. La matière supportée par le tablier transporteur traverse successivement le séchoir de la gauche vers la droite sur la fig. 1.

L'entrée du séchoir est munie d'un sas d'étanchéité 3, sa sortie est équipée d'une chambre d'introduction d'air neuf 5, et les deux zones 1 et 2 sont séparées par un sas intermédiaire ou zone de jonction 4.

On notera que le sas 3 et la chambre 5 sont délimitées du côté interne par des rideaux d'air schématisés sur la figure par une ligne en trait fin, définis par des circuits d'alimentation d'air non représentés sur la figure.

Chacune des zones 1 et 2 est constituée de plusieurs cellules semblables 11, 12 comportant chacune un ventilateur 11a, 12a pour brasser l'air servant à sécher la matière. La zone 1 comprend quatre cellules 11 dont les séparations sont schématisées sur la figure par un trait fin. De la même manière, la zone 2 comprend quatre cellules 12. Un moyen tel que brûleur ou échangeur 11b est disposé dans chaque cellule 11 pour réchauffer l'air venu en contact avec cette dernière.

9                    0079523

Tous les échangeurs 11b sont reliés par un circuit de fluide
non représenté et peuvent être par exemple des batteries à eau
chaude surchauffée.

L'air neuf introduit par la chambre 5 traverse successivement les diverses cellules 12 de séchoir constituant la zone
2, puis le sas intermédiaire 4 dans lequel il est mélangé à
l'air recyclé provenant de la zone 1.

Le mélange de ces deux flux d'air poursuit son chemin de
la droite vers la gauche sur la fig. 1 à l'intérieur des
diverses cellules 11 constituant la zone 1, avant d'être
extrait en totalité de la première cellule ou cellule amont 11
par le ventilateur de recyclage 6.

La totalité de l'air, réchauffé par les échangeurs 11b et
chargé d'humidité au contact de la matière à sécher, passe
alors du ventilateur 6 dans un dispositif de déshydratation et
de réchauffage placé à l'extérieur du séchoir et comprenant un
échangeur de chaleur 7 qui peut comporter selon le dessin deux
corps d'échange 8a et 8b dont les rôles respectifs seront
explicités ci-après. Une partie de cet air peut être alors
extraite du circuit par la canalisation 9 munie d'un registre
papillon réglable, le reste du flux d'air étant réchauffé par
le réchauffeur 10 avant d'être réinjecté dans le sas 4 pour
être mélangé à l'air extrait de la zone 2 à destination de la
zone 1.

Le corps d'échange 8b constitue l'évaporateur d'un circuit de pompe à chaleur dont le compresseur est référencé 15
et dont le condenseur est divisé en quatre éléments condenseurs 12b qui constituent les échangeurs destinés à réchauffer
l'air circulant dans la zone 2. A cette fin, on voit sur la
figure que chaque cellule 12 de la zone 2 comprend un élément
condenseur 12b.

Selon une variante de réalisation de l'invention illustrée en tirets sur la fig. 1, on peut prévoir que l'échangeur
8a est un échangeur entre l'air et un fluide caloporteur tel
que "Fréon" ou eau glycolée. Ce fluide caloporteur réchauffé
dans l'échangeur 8a est mis en circulation par l'intermédiaire
de la pompe 14 vers les échangeurs 13 prévus pour préchauffer l'air de fuite introduit par les sas d'entrée 3 et de sortie 5. Dans ce cas, l'échangeur 8a sert à réguler la quantité d'énergie résiduelle parvenant à l'évaporateur 8b de la pompe à chaleur, le fluide vaporisé issu de cet échangeur 8b étant repris par le compresseur 15 avant d'alimenter les condenseurs 12b des cellules de la zone 2 comme précédemment. Il devient donc possible de contrôler l'humidité de l'air réinjecté dans le sas 4. Une autre possibilité de contrôle réside dans la variation du débit d'aspiration du ventilateur 6.

Selon une autre variante de réalisation de l'invention illustrée en traits mixtes sur la fig. 1, les sas d'entrée 3 et de sortie 5 ou l'un seulement de ces deux dispositifs est alimenté en air chaud et humide extrait du séchoir par la canalisation 9 au lieu que cet air soit simplement rejeté à l'extérieur comme précédemment.

Dans une autre variante la pompe 14 illustrée sur la fig. 1 peut être remplacée par un compresseur constituant ainsi une deuxième pompe à chaleur dont l'échangeur 8a représente l'évaporateur et dont les condenseurs 13 peuvent cette fois être utilisés pour réchauffer des cellules supplémentaires de la zone 2.

L'exemple 1 qui suit illustre l'application de l'invention dans cette dernière variante au séchage après lavage de la laine brute de tonte disposée en vrac sur le tablier transporteur d'un séchoir tel qu'illustré sur la fig. 1.

## EXEMPLE 1

On veut traiter 1345 kg/h exprimés en poids sec absolu, de laine brute entrant dans l'appareil après lavage avec une humidité initiale de 72% pour en ressortir avec une humidité finale de 8,6% environ, de telle manière que l'on ait à en retirer 853 kg/h d'eau.

Cette illustration constitue un cas particulièrement avantageux de l'invention, en ce qu'elle a trait à un séchoir dans lequel l'air en circulation est intégralement recyclé, le séchoir étant divisé en trois zones dont la première est chauffée par de l'eau surchauffée, et les deux autres sont chauffées par l'énergie récupérée sur les gaz d'extraction, eux-mêmes recyclés dans l'ensemble de la machine.

La totalité du débit masse d'air sec traversant le ventilateur de recyclage situé à l'extérieur de la machine est de 12000 kg/h dont 1375 kg/h sont réintroduits par le sas intermédiaire, 3905 kg/h sont réintroduits par la chambre d'introduction d'air neuf, placée en sortie de la machine, et le solde est réparti en deux parties égales de 3360 kg/h chacune pour être réintroduites entre la zone 3 et la zone 2 pour l'une, entre la zone 2 et la zone 1 pour l'autre.

La totalité de ce débit d'air quitte les évaporateurs 8a, 8b des pompes à chaleur à un état saturé à une température sèche de 35°C et avec un rapport de mélange de 36,78 g d'eau par kilogramme d'air sec.

Il retourne à ces évaporateurs après avoir traversé l'ensemble de la machine, avec un rapport de mélange égal à 108 g/kg, la température humide étant de 58°C et la température sèche à l'extraction de la zone 1 étant de 115°C, ce qui correspond à une enthalpie de 407 kJ/kg.

Après passage dans le premier évaporateur 8a, l'air sort saturé avec le même rapport de mélange, à une température sèche de 54°C et une enthalpie de 335 kJ/kg, ayant ainsi abandonné sur le premier évaporateur une quantité d'énergie égale à 864.000 kJ/kg.

Ce premier évaporateur est monté dans le circuit d'une première pompe à chaleur, utilisant le fluide frigorigène R114, on peut ainsi dissiper l'énergie recouvrée dans les condenseurs correspondants pour fournir de manière connue environ 860.000 kJ/kg servant à chauffer de l'air à 100°C dans deux cellules intermédiaires du séchoir.

L'air sortant du premier évaporateur 8a passe alors en totalité sur le second évaporateur 8b sur lequel l'eau qu'il contient se condense, l'air refroidi et déshydraté quittant cet évaporateur à une température sèche de 35°C, avec un rapport de mélange de 36,78 g d'eau par kilogramme d'air sec.

La condensation de cette eau représente une énergie récupérée sur le deuxième évaporateur. Ce second évaporateur est monté dans le circuit d'une seconde pompe à chaleur utilisant comme fluide frigorigène le dichloro difluorométhane (R12); on peut également dissiper ainsi l'énergie recouvrée dans les condenseurs correspondants des six cellules constituant la dernière zone, pour leur fournir environ 2.000.000 kJ/h pour chauffer à 65° l'air qui y circule.

Chacune de ces cellules a une largeur utile de 1,9 m et une longueur de 3 m. Or, à une température de soufflage d'air de 65°, l'évaporation spécifique sur la laine est d'environ 13,5 kg/h.m2 alors qu'elle peut atteindre 18 kg/h.m2 lorsque la température de soufflage est de l'ordre de 100°C.

De ce fait, l'énergie récupérée peut servir à évaporer en moyenne :

dans la 3ème zone : 461,8 kg/h

dans la 2ème zone : 205,2 kg/h

soit 667 kg/h d'eau, avec une consommation spécifique moyenne sur les arbres des ventilateurs et des compresseurs inférieure à 300 Wh par kilogramme d'eau évaporée.

Il reste donc à évaporer 186 kg/h d'eau dans la première zone, laquelle peut être chauffée à 140°C par de l'eau chaude surchauffée circulant dans des échangeurs. Dans cette zone en effet, le produit en cours d'échauffement est à son humidité la plus forte et peut être traité sans dommage à cette température. L'évaporation spécifique moyenne qui atteint alors 23,5 kg/h.m2 est largement supérieure à ce qui est nécessaire pour obtenir le résultat cherché dans deux cellules de 3 m de long.

En tenant compte des pertes du séchoir et de la quantité d'énergie à fournir au produit entrant, pour l'amener à la température humide régnant à l'intérieur de la première partie de l'enceinte, la quantité d'énergie à fournir dans ces deux cellules n'est pas supérieure à 544.000 kJ/kg, énergie de ventilation comprise.

Compte tenu du fait que la puissance totale du séchoir s'établit alors à moins de 315 kW, on obtient de la sorte une consommation spécifique d'énergie, toutes fournitures confondues, de l'ordre de 365 Wh par kilogramme d'eau évaporée sur au total 10 cellules de séchoir.

Or, un séchoir de 10 cellules identiques, exclusivement chauffé par de l'eau chaude surchauffée, ne parvient à évaporer la même quantité d'eau qu'au prix d'une consommation énergétique spécifique au moins égale à 860 kcal par kilogramme d'eau évaporée.

Par contre, pour un séchoir ne fonctionnant exclusivement qu'avec des pompes à chaleur au fluide frigorigène R12, il serait nécessaire d'utiliser un séchoir d'au moins 18 cellules identiques pour obtenir le même résultat.

On peut donc établir que dans ce cas, la consommation énergétique spécifique ramenée à l'énergie primaire ne dépasse que de peu 690 Wh/kg, ce qui reste favorable par rapport aux autres solutions connues compte tenu de la part prépondérante prise par l'énergie d'origine électrique dans le fonctionnement du circuit de chauffage du séchoir ainsi constitué.

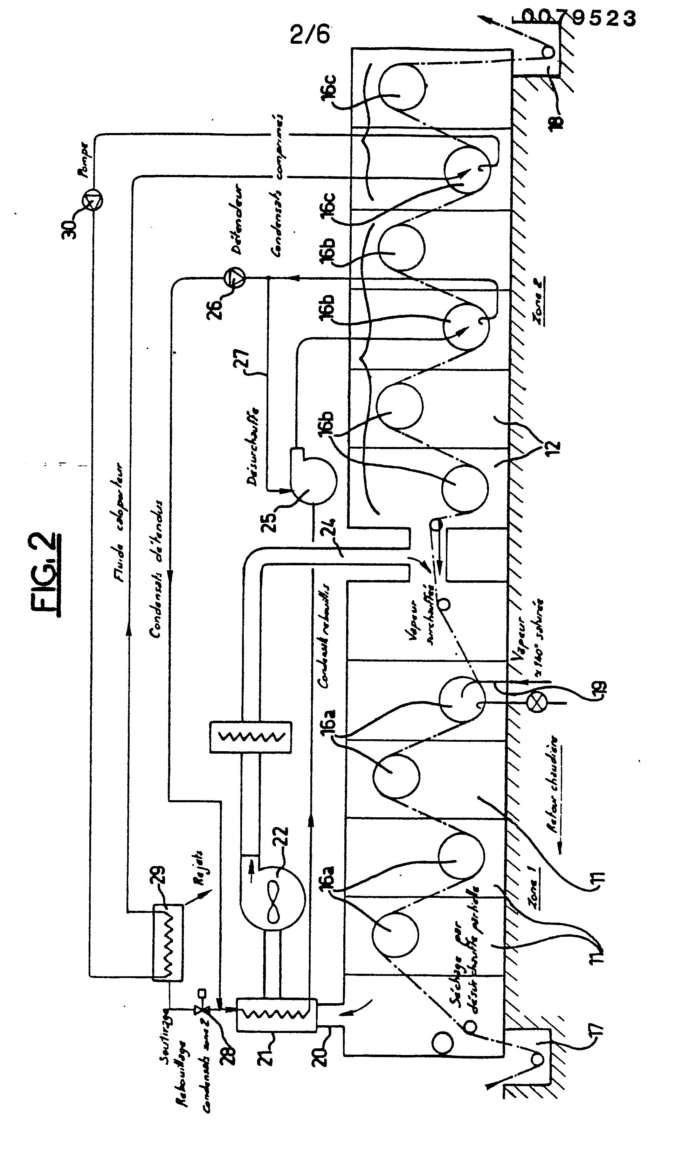

On va maintenant décrire, en se référant à la fig. 2 sur laquelle les éléments analogues portent les mêmes références, un deuxième exemple montrant une application intéressante de l'invention à la recompression mécanique de la vapeur, (également appelée pompe à chaleur directe) dans l'équipement d'une sécherie à contact par cylindres à virole pleine telles que celles qui équipent les ateliers d'ennoblissement textile ou les usines de fabrication du papier.

Telle qu'elle est représentée sur la fig. 2, la sécherie comprend deux zones 1 et 2 avec l'une quatre et l'autre six cylindres 16a, 16b, 16c, disposés chacun dans une cellule 11 ou 12. Ces zones sont respectivement munies d'une entrée 17 et d'une sortie 18 de matière, placées en position surbaissée pour éviter les fuites vers l'extérieur du fluide de transfert qui est dans ce cas de la vapeur surchauffée pure.

Dans la première zone 1, qui correspond à la charge évaporatoire la plus forte, les cyclindres 16a sont chauffés à 140°C par condensation de vapeur à une pression de 3,5 bars absolus, vapeur dont les condensats sont renvoyés directement en chaudière. Pour simplifier, seul l'un des circuits de vapeur 19 de l'un des cylindres 16a a été représenté. On comprendra que les autres cylindres sont chauffés de la même manière.

Pour améliorer l'effet de la conduction pure sur le séchage de la matière traitée, on injecte dans cette zone la vapeur provenant de l'évaporation du tissu dans la deuxième zone et on la mélange avec la vapeur provenant du circuit de recyclage, vapeur préalablement resurchauffée avant réinjection. A cet effet, la vapeur issue de la zone 1 est évacuée par la tubulure 20, passe l'échangeur de chaleur 21, est comprimée dans le compresseur 22, puis resurchauffée dans l'échangeur 23 avant d'être réinjectée à la jonction des zones 1 et 2 par la tubulure 24. Cette vapeur surchauffée vient compléter l'effet de séchage provoqué par le chauffage des cylindres 16a de la zone 1 et facilite l'élimination de l'eau contenue dans le tissu par effet simultané de convection forcée et de désurchauffe.

La vapeur ainsi partiellement désurchauffée est ramenée alors à un état plus proche encore de la saturation sur l'échangeur de chaleur 21 qui assure le rebouillage des condensats provenant en circuit fermé d'une partie des cylindres 16b de la deuxième zone 2. Ces condensats rebouillis sont alors recomprimés par le compresseur 25 et réinjectés directement dans les quatre premiers cylindres 16b de la zone 2 dont ils proviennent. Pour simplifier seul l'un des circuits de réinjection d'un cylindre 16b a été représenté. On comprendra que les autres cylindres 16b sont alimentés de la même manière.

Le circuit des condensats se complète par un détendeur 26 dans le circuit de retour vers l'échangeur 21 constituant l'évaporateur de cette pompe à chaleur dont les condenseurs sont les cylindres 16b eux-mêmes. Un circuit de dérivation 27 assure la désurchauffe des condensats.

Une partie de la vapeur issue de la zone 1 représentant la totalité de l'eau à évaporer de l'ensemble de la machine est soutirée par la valve 28 et rejetée après avoir été condensée par contact dans un échangeur 29 dans lequel circule un fluide de transfert connecté aux autres cylindres 16c de la deuxième zone 2 par l'intermédiaire par exemple d'un circuit fermé muni d'une pompe 30 et d'un vase d'expansion non représenté.

Une telle installation peut comprendre 10 tambours de 800 mm de diamètre et de 2 m de large dont les quatre premiers 16a inclus dans la zone 1 sont chauffés avec de la vapeur saturée à 3,5 bars absolus, les quatre suivants 16b inclus dans la zone 2 sont chauffés par le rebouillage de leurs propres condensats à partir de l'énergie récupérée de la vapeur extraite de la zone 1, et les deux derniers 16c par le circuit de condensation de l'eau évaporée. Cette installation est capable d'évaporer 25 kg d'eau par heure et par mètre carré de surface de chauffe en moyenne à partir d'un velours trame 100% coton de 270 g/m2, à l'état demi blanc avant passage à la coupeuse, avec une consommation énergétique spécifique inférieure à 1450 kJ/kg, toutes énergies confondues, ce qui montre un niveau tout à fait intéressant d'économies d'énergie.

Il faut noter que, par rapport aux systèmes de séchage des tissus sur cylindres avec rebouillage, recompression et réinjection de leurs condensats tels qu'on les connaît actuellement, la consommation spécifique est plus forte d'environ 20%. Toutefois, on obtient dans le cas de l'exemple une productivité comparable aux machines classiques, ce qui ne peut être réalisé avec les machines à rebouillage des condensats qui consomment une énergie moindre, du fait de l'absence de convection forcée, et surtout parce que les condensats rebouillis et réinjectés dans la machine le sont en général à une température qui ne dépasse pas 107 à 108°C. Il en est ainsi en particulier dans le séchoir à bobines conforme au brevet français n° 79 24 440. Dans le cas de tels dispositifs en effet la productivité de la machine serait sensiblement réduite de moitié, ce qui conduit à doubler environ le coût de l'investissement pour obtenir une productivité égale.

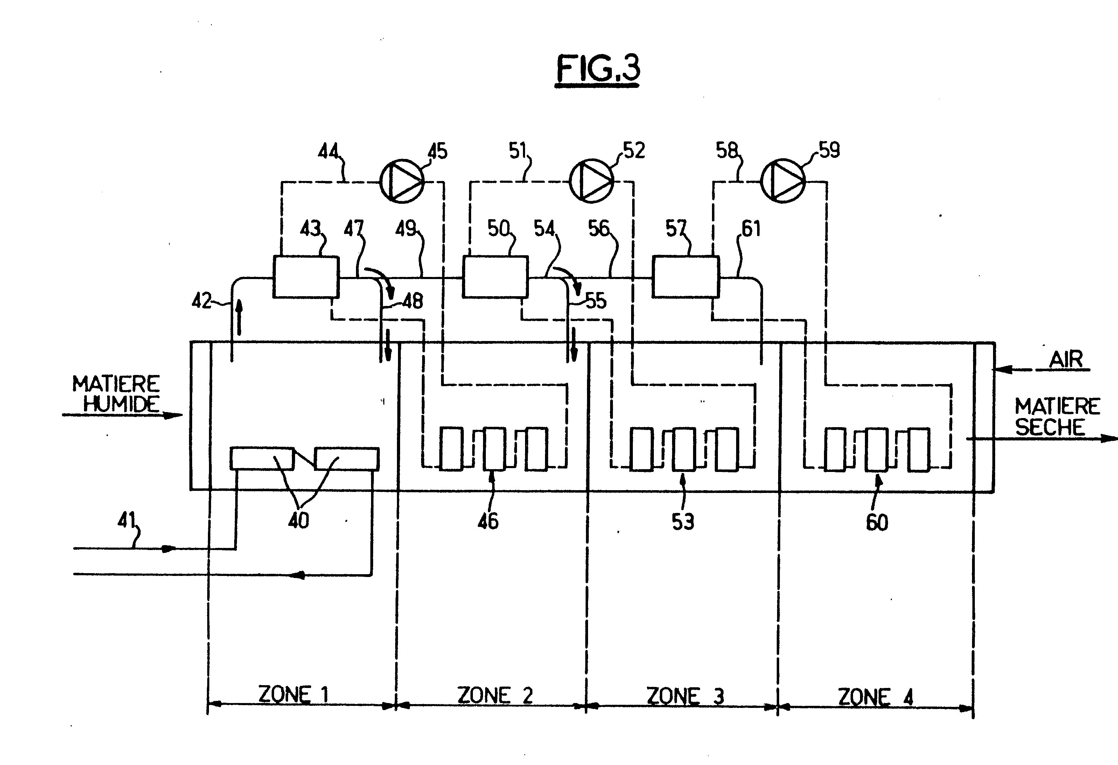

On a représenté schématiquement sur la fig. 3 une installation de séchage selon l'invention comprenant un séchoir tunnel alimenté en air chaud. Le séchoir continu est divisé dans le mode de réalisation illustré en quatre zones respectivement dénommées zone 1, zone 2, zone 3 et zone 4 dans le sens de déplacement de la matière à sécher qui traverse successivement le séchoir de la gauche vers la droite sur la fig. 3. L'air de séchage est au contraire introduit par l'extrémité droite du séchoir c'est-à-dire par la zone 4.

Les moyens de transport de la matière à sécher n'ont pas été représentés sur la figure afin de la simplifier. De la même manière, on n'a pas représenté de manière précise les différents sas d'étanchéité qui permettent l'introduction de la matière et la délimitation des différentes zones à l'intérieur du séchoir.

La première zone ou zone 1 est chauffée par une batterie de chauffage 40 constituée par exemple par des échangeurs de type classique alimentés en vapeur par un circuit indépendant 41. L'air de séchage qui a traversé l'ensemble des zones et s'est chargé en humidité en se refroidissant au contact de la matière à sécher est repris dans la portion aval de la zone 1 par la canalisation 42 qui comprend des moyens de reprise non illustrés constitués par exemple par un ventilateur. L'air ainsi repris est amené dans un dispositif extérieur de déshydratation et de réchauffage associé à la zone 1, constitué dans l'exemple illustré, essentiellement par un échangeur de chaleur 43 jouant le rôle d'évaporateur dans le circuit de pompe à chaleur 44 illustré en tirets sur la figure. Le circuit de pompe à chaleur 44 comprend de manière classique un compresseur 45 et un ensemble condenseur 46 comprenant un ensemble d'échangeurs de chaleur placés directement à l'intérieur de la zone 2.

L'air issu de l'évaporateur 43 par la canalisation 47 est en partie recyclé par le conduit 48 dans la zone 1 au voisinage de sa portion amont si l'on considère l'écoulement de l'air. L'autre partie de l'air provenant de la canalisation 47 à la sortie de l'évaporateur 43 alimente, par la canalisation 49, l'échangeur 50 qui constitue le dispositif extérieur de
déshydratation et de réchauffage associé à la zone 2 ainsi que
l'évaporateur du circuit de pompe à chaleur 51. Ce circuit de
pompe à chaleur comprend comme le précédent, un compresseur 52
et un ensemble condenseur 53 placé à l'intérieur de la zone 3.
L'air déshydraté dans l'évaporateur 50 et issu de ce dernier
par la canalisation 54 est en partie recyclé dans la zone 2
par le conduit 55, l'autre partie alimentant, par la canalisation 56, l'échangeur 57 qui constitue le dispositif de
déshydratation et de réchauffage associé à la zone 3 et en
même temps l'évaporateur du circuit de pompe à chaleur 58
analogue aux précédents. Ce circuit de pompe à chaleur comprend également un compresseur 59 et un ensemble condenseur 60
monté à l'intérieur de la zone 4. L'air déshydraté issu de
l'évaporateur 57 est recyclé dans la zone 3 par la canalisation 61.

Cette disposition particulière des pompes à chaleur
successives 44, 51, 58 a pour effet d'associer des températures de condenseur plus basses et des températures d'évaporateur plus fortes que dans les circuits de pompe à chaleur
utilisés jusqu'à présent. Cette disposition permet pratiquement de doubler la valeur du coefficient de performance théorique du cycle de Carnot associé au fonctionnement de chaque
circuit de pompe à chaleur. Il devient donc possible de doubler également le coefficient de performance pratique de ces
circuits ce qui compense plus que largement la fraction d'énergie conventionnelle utilisée pour le chauffage de la zone 1 au
moyen des batteries 40. En effet, l'énergie mécanique nécessaire sur les arbres des compresseurs 45, 52 et 59 des différentes pompes à chaleur est réduite de moitié tout en permettant l'obtention du même rendement dans toutes les zones du
séchoir de rang supérieur à 1.

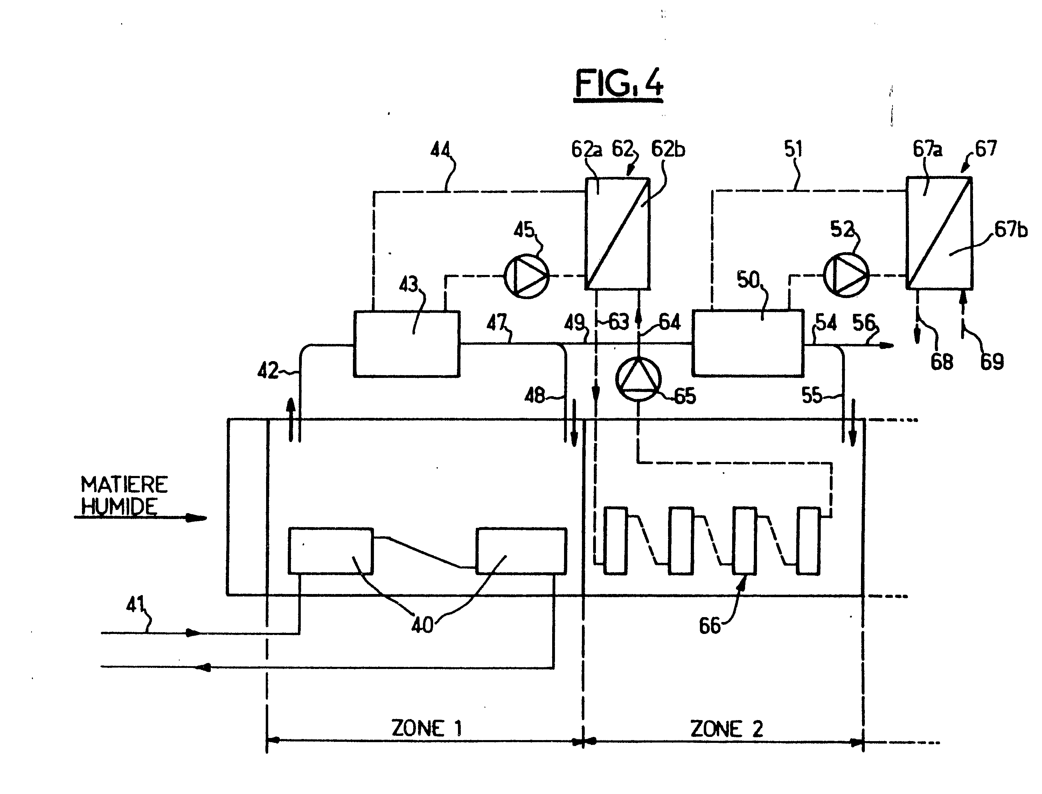

Le mode de réalisation représenté sur la fig. 4 illustre
schématiquement l'application de l'invention dans le cas où
l'on désire éviter de disposer l'ensemble condenseur des
circuits de pompe à chaleur directement à l'intérieur des
zones de rang supérieur à 1. Sur la fig. 4 où les organes identiques portent les mêmes références, on a représenté
uniquement les deux premières zones étant entendu que les
zones suivantes comportent les mêmes organes disposés selon un
motif récurrent.

On retrouve sur la fig. 4 la première zone ou zone 1
chauffée de manière classique par les batteries 40. On
retrouve également l'évaporateur 43 du dispositif extérieur de
déshydratation et de réchauffage ainsi que le circuit 44 de
pompe à chaleur comprenant le compresseur 45. Dans ce mode de
réalisation cependant, l'ensemble condenseur du circuit de
pompe à chaleur 44 est constitué par le premier circuit 62a
d'un échangeur de chaleur 62 dont le deuxième circuit 62b sert
de réchauffeur pour un fluide secondaire qui circule dans une
boucle intermédiaire comprenant les canalisations 63 et 64 et
la pompe de circulation 65. Un ensemble de batteries de chauffage 66 situées directement à l'intérieur de la seconde zone
ou zone 2 du séchoir fait également partie de cette boucle
intermédiaire.

Une telle disposition est particulièrement avantageuse
dans le cas où l'on veut sécher des produits très polluants
qui ne peuvent être mis en présence avec l'air à l'intérieur
du séchoir qu'avec des échangeurs à tube lisse qui constituent
par exemple les batteries 66. En raison du faible coefficient
de transfert de chaleur obtenu par condensation, par exemple
du fréon, à l'intérieur d'un tube métallique lisse, il est en
effet préférable d'utiliser comme condenseur le premier circuit 62a de l'échangeur liquide/liquide 62 dont l'autre circuit 62b est parcouru par un autre fluide calorigène entraîné
par la circulation forcée de la pompe 65 dans les échangeurs
liquides/gaz que constituent les batteries 66 situées directement à l'intérieur du séchoir pour chauffer l'air qui y circule.

La même disposition peut être utilisée pour les autres
zones non représentées sur la figure. On voit toutefois sur la
fig. 4 l'évaporateur 50 associé à la deuxième zone ainsi que
son circuit de pompe à chaleur 51 et son compresseur 52. Le
condenseur est également constitué par le premier circuit 67a
de l'échangeur 67 dont le deuxième circuit 67b permet le réchauffage de la troisième zone au moyen de batteries de chauffage non représentées se trouvant dans la boucle intermédiaire comprenant par les canalisations 68 et 69.

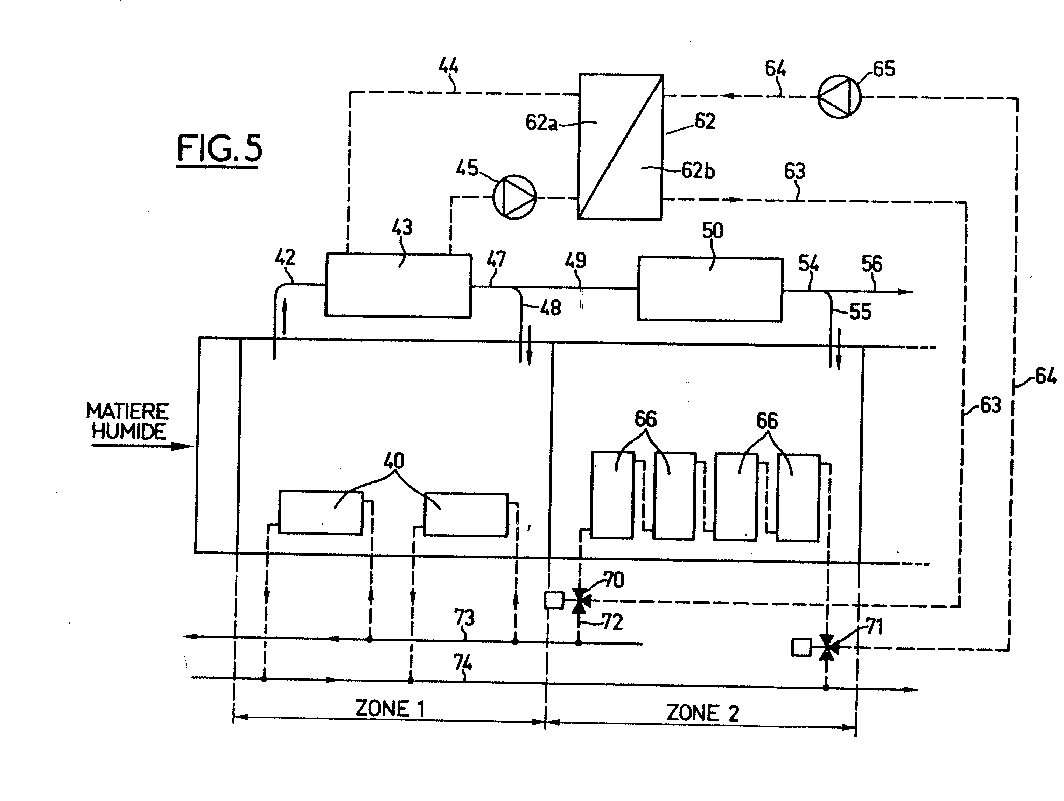

Dans le mode de réalisation illustré sur la fig. 5 où les organes identiques portent les mêmes références, on utilise la même configuration que dans la variante illustrée sur la fig. 4. Comme sur la fig. 4 on a représenté uniquement, aux fins de simplification les zones 1 et 2 de l'installation étant entendu que les zones ultérieures présentent la même configuration que la zone 2. Comme dans le mode de réalisation de la fig. 4, le condenseur 62a du circuit de pompe à chaleur 44 associé à la zone 1 est constitué par le premier circuit 62a d'un échangeur liquide/liquide 62 se trouvant à l'extérieur du séchoir.

Dans le mode de réalisation décrit sur la fig. 5, la boucle intermédiaire dans laquelle se trouve le deuxième circuit 62b de l'échangeur 62 et les batteries de chauffage 66 placées à l'intérieur de la zone 2, comprend deux vannes de distribution à trois voies 70 et 71 dont les positions peuvent être régulées automatiquement. La vanne 70 placée dans la canalisation 63 autorise le passage du fluide secondaire en partie vers les batteries de chauffage 66 et en partie par la canalisation 72 reliée au réseau général d'alimentation 73 vers les batteries de chauffage 40 de la première zone. De la même manière, la vanne 71 peut autoriser en partie le passage du fluide provenant des batteries 66 vers l'échangeur 62 et en partie vers le réseau d'alimentation 74.

Dans ce mode de réalisation, le fluide utilisé pour chauffer la zone 2 et les zones suivantes du séchoir, fluide qui circule dans les batteries de chauffage se trouvant dans ces zones telles que les batteries 66 et dans les réchauffeurs des boucles secondaires telles que le réchauffeur 62b, est le même que celui qui traverse les batteries de chauffage 40 situées à l'intérieur de la première zone. Le couplage de l'ensemble des batteries de chauffage telles que les batteries 66 à la fois aux réchauffeurs des boucles secondaires tel que le réchauffeur 62b et au réseau général d'alimentation des batteries de chauffage 40 de la première zone par l'intermédiaire des vannes 70 et 71 permet de jouer en permanence sur les consommations prélevées aux deux sources d'énergie que constituent d'une part le réseau d'alimentation en fluide de chauffage pour la première zone et d'autre part les différentes pompes à chaleur associées aux zones de rang supérieur à 1. Il est donc possible d'adapter à tout moment, éventuellement automatiquement, le coût de fonctionnement du séchoir en fonction des prix de revient respectifs de ces deux sources d'énergie. Une telle disposition s'avère particulièrement intéressante lorsque l'on utilise des pompes à chaleur haute à température comprenant des compresseurs entraînés par des moteurs électriques tandis que le chauffage de la première zone est fait par un circuit d'eau chaude surchauffée. Pendant les périodes dites "de pointe" pour la consommation et la facturation de l'électricité, il est alors possible de chauffer tout ou partie des zones de rang supérieur à 1 par le circuit d'eau chaude surchauffée en diminuant la consommation d'électricité des circuits de pompe à chaleur.

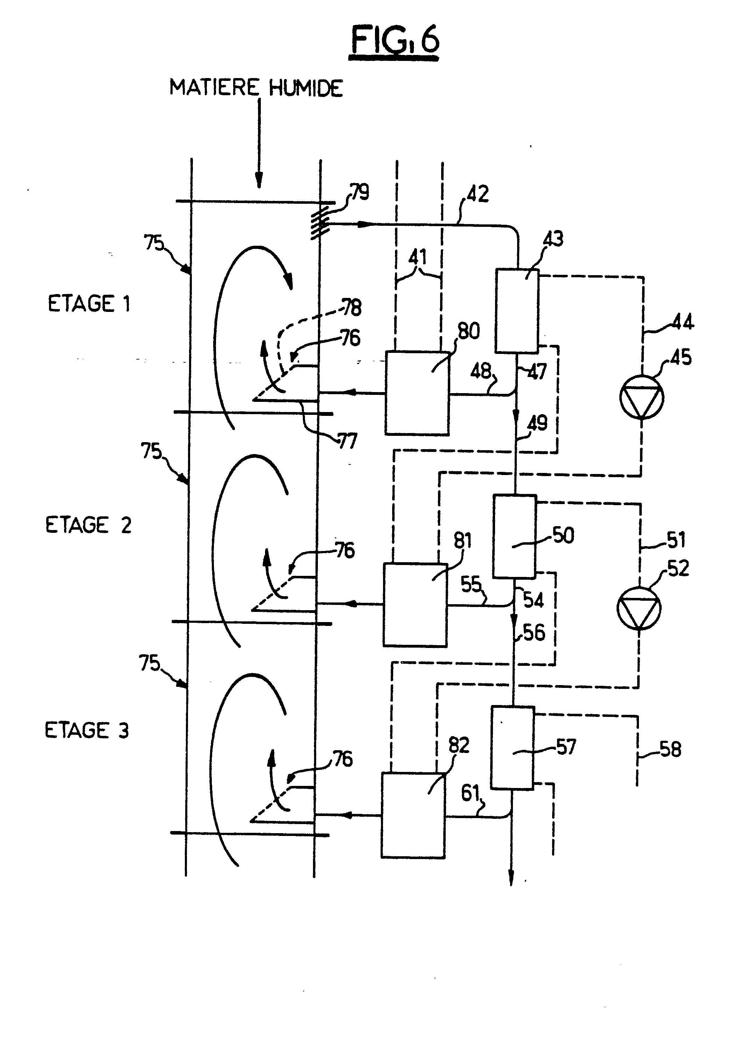

Le mode de réalisation illustré sur la fig. 6 montre l'application de l'invention à un séchoir pneumatique sous forme de colonne. Dans ce mode de réalisation, le séchoir est constitué par une pluralité de cellules superposées identiques 75. Trois de ces cellules ont été illustrées sur la figure et elles constituent les étages 1 à 3 du séchoir vertical. Chaque cellule 75 est constituée par un segment de tube qui peut être parallélépipédique ou de section circulaire susceptible d'être solidarisé avec deux cellules adjacentes par des moyens appropriés. Un corps creux en forme de chicane 76 est accolé à l'une des parois de chaque cellule 75 au voisinage de son extrémité basse ou extrémité amont si l'on considère la circulation de l'air de séchage. La chicane 76 comporte une première surface pleine 77 perpendiculaire à l'écoulement du mélange fluidisé et définissant une section de passage étranglée à l'intérieur de la cellule 75. La chicane 76 comporte également une deuxième surface 78 perforée inclinée vers la direction aval de l'écoulement c'est-à-dire ici vers le haut. L'inclinaison de la surface 78 est de préférence choisie aux

**0079523**

alentours de 45°. De manière générale, il convient que les
particules solides ne puissent pas rester sur cette surface
inclinée ce qui commande le choix de l'inclinaison. Un orifice
de reprise 79 est situé dans l'extrémité haute de la même
paroi de la cellule 75 constituant l'étage 1. L'orifice 79
comprend de préférence un élément filtrant non représenté.

De l'air chaud de séchage est introduit à la partie basse
de la colonne par des moyens non représentés. L'air ainsi
introduit permet de fluidiser et de transporter des particules
solides à sécher et en particulier des matières pulvérulentes
fines qui sont introduites à la partie supérieure de l'appareil.

Le traitement de l'air issu de l'orifice de reprise 79 se
trouvant dans l'étage 1, c'est-à-dire dans l'étage supérieur
ainsi que la recirculation se font de la même manière que dans
le mode de réalisation illustré sur la fig. 3, les organes
identiques portant ici les mêmes références. C'est ainsi que
l'on retrouve le conduit de reprise d'air 42 connecté à l'orifice de reprise 79, l'air ainsi repris traversant l'évaporateur 43 du dispositif extérieur de déshydratation et de réchauffage associé à l'étage 1. L'air ainsi réchauffé est en partie
recyclé par le conduit 48 et le corps creux 76 dans la cellule
supérieure qui constitue l'étage 1. Un réchauffage de cet air
est complété par le réchauffeur 80 qui est placé dans le
conduit d'admission 48 et qui est constitué par un échangeur
de chaleur recevant par exemple de la vapeur d'eau surchauffée
par le circuit d'alimentation 41.

L'évaporateur 43 fait partie, comme dans le mode de
réalisation de la fig. 3, du circuit de pompe à chaleur 44.
Toutefois, le condenseur 81 de ce circuit de pompe à chaleur
est ici monté, non pas à l'intérieur même de la cellule 75
constituant le deuxième étage, mais compte tenu de ses dimensions, dans le conduit d'admission 55 permettant la recirculation vers l'étage 2 d'une partie de l'air réchauffé.

Le condenseur 82 du circuit de pompe à chaleur 51 est
également disposé dans le conduit d'admission 61 permettant la
recirculation dans l'étage 3.

0079523

L'adjonction de fluide supplémentaire recyclé par les surfaces perforées 78 des corps creux 76 des différents étages permet d'augmenter le mouvement tourbillonnaire illustré par les flèches sur la fig. 6 à l'intérieur des cellules 75 et en outre de modifier les conditions du séchage par l'introduction d'un débit supplémentaire d'air déshydraté et réchauffé.

On constate une augmentation notable de l'efficacité du séchage provoquée par le recyclage intensif de l'air porteur partiellement déshydraté et subissant dans chaque cellule un fort mouvement tourbillonnaire dû en partie à l'existence des chicanes disposées sur les parois du séchoir.

Une telle installation est particulièrement intéressante pour traiter, avec une très faible quantité d'énergie, en vue de les sécher à basse température, des produits de faible valeur tels que les boues urbaines après biométhanisation, les vinasses, les pulpes de sucrerie, les drèches de brasserie et autres résidus non comestibles des industries agricoles que l'on peut revaloriser comme engrais ou comme aliments de bétail après un traitement biologique approprié.

Une telle installation est également particulièrement indiquée pour enrober des produits granulaires en vue d'en modifier les propriétés ou l'aspect tout en en assurant le séchage au moins partiel en utilisant à cette fin des circuits de pompe à chaleur, ce qui était impossible jusqu'à présent avec les dispositifs d'enrobage en lit jaillissant communément réservés aux applications de ce type.

Bien que l'invention ait été appliquée à titre d'exemple à des séchoirs-tunnels, on comprendra qu'elle puisse être appliquée à tout type de séchoir et notamment les séchoirs pneumatiques constitués par une ou plusieurs colonnes verticales, les séchoirs constitués d'au moins deux fluidiseurs opérant en cascade, ou les séchoirs à plusieurs cylindres.

Dans le cas des séchoirs-tunnels les moyens de manutention utilisés peuvent être conçus de façon à permettre aux gaz de séchage de traverser la matière à sécher, comme c'est le cas avec des tabliers transporteurs constitués de toile métallique ou avec des tambours perforés sur lesquels la matière à sécher passe successivement entre l'entrée et la sortie du séchoir. On peut également prévoir au moins un élément fluidiseur intermédiaire dans un tel séchoir-tunnel.

0079523

## REVENDICATIONS

1. Installation de séchage par gaz chauds et secs comprenant au moins deux zones (1, 2) traversées successivement par la matière à sécher, comprenant : une pompe à chaleur dont le condenseur (12b) est disposé dans la deuxième zone (2) de façon à chauffer par contact les gaz circulant dans cette zone et dont l'évaporateur (8b) est placé dans un dispositif extérieur de déshydratation et de réchauffage; des moyens d'extraction (6) pour prélever la totalité des gaz circulant dans la première zone (1) et les introduire dans le dispositif extérieur de déshydratation et de réchauffage précité afin qu'ils entrent en contact avec l'évaporateur (8b) de la pompe à chaleur pour être déshydratés; caractérisée par le fait que 'installation comprend une source d'énergie calorifique (11b) disposée dans la première zone (1) de façon à chauffer par contact les gaz circulant dans cette zone; et des moyens (10) dans le dispositif extérieur de déshydratation et de réchauffage pour réchauffer et réintroduire dans la première zone (1) au moins une partie de ces gaz au voisinage de la jonction entre la première et la deuxième zone, lesdits gaz se mélangeant alors avec les gaz provenant de la deuxième zone et alimentant la première zone.

2. Installation selon la revendication 1, caractérisée par le fait que la pompe à chaleur est telle que l'énergie calorifique des gaz extraits de la première zone recouvrée par l'évaporateur (8b) de la pompe à chaleur, et l'énergie mécanique de recompression du fluide frigorigène circulant dans la pompe à chaleur, soient intégralement dissipées dans la seconde zone (2), la réintroduction des gaz déshydratés et réchauffés se faisant également à certains endroits déterminés de la deuxième zone (2).

3. Installation selon l'une des revendications 1 et 2, caractérisée par le fait que les moyens d'extraction (6) précités sont disposés de façon que les gaz chauds et humides soient extraits à contre courant de l'installation, en tête de la première zone (1) dans laquelle une partie au moins des gaz extraits sont recyclés après déshydratation et réchauffage.

4. Installation selon l'une quelconque des revendications 1 à 3, caractérisée par le fait que les longueurs des deux zones sont telles que les quantités d'eau respectivement évacuées avec les gaz transférés de la deuxième zone à la première et de la première zone au dispositif extérieur de réchauffage et de déshydratation soient intégralement recouvrées sur ce dernier pour permettre un recyclage substantiellement complet des gaz extraits une fois qu'ils ont été déshydratés, des moyens (9) étant en outre prévus pour réinjecter dans l'installation par des orifices d'admission de gaz frais, une partie de ces gaz déshydratés.

5. Installation selon la revendication 4, caractérisée par le fait qu'elle comprend des moyens pour contrôler l'humidité des gaz réinjectés dans l'installation par certains au moins de ses orifices d'admission de gaz frais, pour empêcher le surséchage de la matière à sécher.

6. Installation selon l'une quelconque des revendications 1 à 5, caractérisée par le fait que le dispositif extérieur de réchauffage et de déshydratation comprend un échangeur de chaleur complémentaire (8a) monté en amont de l'évaporateur (8b) de la pompe à chaleur et relié à un circuit de fluide caloporteur pour transporter l'énergie recouvrée vers des batteries (13) de préchauffage des gaz frais.

7. Installation selon la revendication 6, caractérisée par le fait que le circuit de fluide caloporteur de l'échangeur de chaleur complémentaire comprend un détendeur et un compresseur pour permettre la condensation, dans les batteries de préchauffage (13), du fluide caloporteur vaporisé dans l'échangeur complémentaire.

8. Installation selon la revendication 6, caractérisée par le fait que le débit de fluide caloporteur circulant dans ledit échangeur de chaleur complémentaire (8a) est asservi par l'intermédiaire d'un moyen de contrôle automatique et continu à une valeur de consigne dépendant de la quantité d'énergie recouvrée sur l'évaporateur de la pompe à chaleur.

9. Installation selon l'une quelconque des revendications 1 à 8, caractérisée par le fait qu'elle comprend un moyen de contrôle automatique et continu pour asservir le débit des gaz déshydratés et réchauffés recyclés à l'intérieur de la première zone à la quantité d'eau introduite dans l'installation avec la matière à sécher.

10. Installation selon l'une quelconque des revendications précédentes, caractérisée par le fait qu'elle comprend un séchoir pneumatique constitué par une ou plusieurs colonnes verticales définissant les deux zones précitées.

11. Installation selon l'une quelconque des revendications 1 à 9, caractérisée par le fait qu'elle comprend un séchoir constitué d'au moins deux fluidiseurs opérant en cascade définissant les deux zones précitées.

12. Installation selon l'une quelconque des revendications 1 à 9, caractérisée par le fait qu'elle comprend un séchoir-tunnel, équipé de préférence de moyens de manutention de la matière à sécher permettant aux gaz de séchage de traverser ladite matière, ledit séchoir tunnel comportant les deux zones précitées.

13. Installation selon la revendication 12, caractérisée par le fait que ledit séchoir tunnel comporte au moins un élément intermédiaire de fluidisation.

14. Installation selon l'une quelconque des revendications 1 à 9 et 12, caractérisée par le fait qu'elle comprend un séchoir à plusieurs cylindres définissant les deux zones précitées.

15. Installation selon l'une quelconque des revendications précédentes, caractérisée par le fait que les gaz de transfert circulant dans l'installation sont constitués de vapeur d'eau surchauffée pratiquement pure.

16. Installation de séchage par gaz chauds et secs comprenant au moins deux zones traversées successivement par la matière à sécher selon les revendications 1 à 5, caractérisée par le fait, qu'en plus du dispositif extérieur de déshydratation et de réchauffage recevant la totalité des gaz circulant dans la première zone (1) et associé à ladite première zone, l'installation comprend, pour la deuxième zone (2) et pour chacune des zones suivantes, un dispositif extérieur de déshydratation et de réchauffage coopérant avec un circuit de pompe à chaleur (44, 51, 58) dont l'ensemble évaporateur (43, 50, 57) fait partie du dispositif de déshydratation et de réchauffage et dont l'ensemble condenseur (46, 53, 60; 62a, 67a; 81, 82) sert au chauffage de la zone immédiatement suivante, une partie des gaz issus de l'ensemble évaporateur étant réintroduits dans la zone associée, l'autre partie des gaz étant amenée à l'ensemble évaporateur du dispositif de déshydratation et de réchauffage de la zone immédiatement suivante.

17. Installation de séchage selon la revendication 16, caractérisée par le fait que la première (1) est chauffée par une source d'énergie indépendante (40, 80) et que la dernière zone (4) est chauffée par l'ensemble condenseur (60) faisant partie du circuit de pompe à chaleur (58) qui inclut également l'ensemble évaporateur (57) du dispositif extérieur de déshydratation et de réchauffage associé à l'avant dernière zone (3).

18. Installation de séchage selon les revendications 16 ou 17, caractérisée par le fait que les ensembles condenseurs (46, 53, 60) servant au chauffage des zones de rang supérieur à 1 sont placés directement à l'intérieur desdites zones.

19. Installation de séchage selon les revendications 16 ou 17, caractérisée par le fait que les ensembles condenseurs (81, 82) servant au chauffage des zones de rang supérieur à 1 sont placés dans un conduit d'admission (55, 61) des gaz chauds réinjectés dans lesdites zones.

20. Installation de séchage selon l'une quelconque des revendications précédentes, caractérisée par le fait qu'au moins certains des ensembles condenseurs sont chacun constitués par le premier circuit (62a, 67a) d'un échangeur de chaleur (62, 67) entre deux fluides, l'autre circuit (62b, 67b) dudit échangeur se trouvant dans une boucle intermédiaire véhiculant un fluide secondaire qui traverse également un ensemble de batteries de chauffage (66) disposées directement à l'intérieur de la zone correspondant à l'ensemble condenseur considéré.

21. Installation de séchage selon la revendication 20, caractérisée par le fait que les différentes boucles intermédiaires comprennent des vannes de distribution (70, 71) pouvant être régulées et autorisant le passage du fluide secondaire en partie vers les batteries de chauffage (66) des zones de rang supérieur à 1 et en partie vers des batteries de chauffage (40) placées directement dans la première zone.

22. Installation de séchage selon la revendication 16, caractérisée par le fait qu'elle comprend un séchoir pneumatique comprenant une enceinte verticale munie de moyens d'alimentation en fluide susceptibles de provoquer la mise en suspension et en circulation de particules solides à sécher sous forme de mélange fluidisé, l'enceinte étant constituée par l'assemblage d'une pluralité de cellules (75) comportant un conduit de reprise du fluide et un conduit d'introduction de fluide supplémentaire en partie recyclé après traitement par le dispositif extérieur de déshydratation et de réchauffage associé à la cellule considérée, lesdites cellules comprenant des moyens de recirculation interne (76) diminuant la section de passage pour le mélange fluidisé au droit desdits moyens.

23. Installation de séchage selon la revendication 22, caractérisée par le fait que le fluide repris à partir de la première cellule est réintroduit après traitement dans la première cellule et dans les cellules suivantes.

## FIG.1

FIG. 2

# FIG.3

MATIERE HUMIDE

AIR

MATIERE SECHE

ZONE 1  ZONE 2  ZONE 3  ZONE 4

3/6

0079523

**FIG.4**

FIG.5

0079523

# <u>FIG. 6</u>

MATIERE HUMIDE

ETAGE 1

ETAGE 2

ETAGE 3

Office européen
des brevets

**RAPPORT DE RECHERCHE EUROPEENNE**

**0079523**
Numéro de la demande

EP 82 11 0120

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | F 26 B 23/00 |
| A | FR-A-2 304 045 (VENTILATION INDUSTRIELLE ET MINIERE) *En entier* | 1,6 | F 26 B 21/04 F 26 B 25/00 F 26 B 13/10 |
| | --- | | |
| A | GB-A-2 000 263 (BRÜCKNER) | | |
| | --- | | |
| A | US-A-3 931 683 (CRITES et al.) | | |
| | --- | | |
| A | DE-A-3 013 820 (JÜRGEN) | | |
| | --- | | |
| A | FR-A-2 346 654 (BÜTTNER-SCHILDE-HAAS) | | DOMAINES TECHNIQUES RECHERCHES (Int. Cl. ³) |
| | --- | | |
| A | FR-A-1 161 753 (FLIEDER) | | F 26 B B 01 J |
| | --- | | |
| A | FR-A-2 453 373 (VALMET OY) | | |
| | --- | | |
| A | US-A-3 178 830 (MARK) | | |
| | ----- | | |

Le présent rapport de recherche a été établi pour toutes les revendications

| Lieu de la recherche | Date d'achèvement de la recherche | Examinateur |
|---|---|---|
| LA HAYE | 22-02-1983 | DE RIJCK F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82